# EUROPEAN PATENT SPECIFICATION

(11) **EP 0 823 398 B1**
(45) Date of publication and mention of the grant of the patent: **02.02.2000**
(21) Application number: 96915254.5
(22) Date of filing: 26.04.1996
(51) Int. Cl.: C01B 31/04, C01B 31/00

(54) **PROCESS AND DEVICE FOR OBTAINING OXIDISED GRAPHITE**
VERFAHREN UND VORRICHTUNG ZUR HERSTELLUNG VON OXIDIERTEM GRAPHIT
PROCEDE ET DISPOSITIF DE PRODUCTION DE GRAPHITE OXYDE

(30) Priority: 28.04.1995 RU 95106784; 22.02.1996 RU 96103479; 22.02.1996 RU 96103543
(43) Date of publication of application: 11.02.1998
(73) Proprietor: Avdeev, Viktor Vasilievich, Moscow, 117513 (RU)
(72) Inventor: AVDEEV, Viktor Vasilievich, Moscow, 117513 (RU); FINAENOV, Alexandr Ivanovich, Saratov, 410028 (RU); NIKOLSKAYA, Irina Viktorovna, Moscow, 117296 (RU); MONYAKINA, Ljudmila Arkadievna, Moscow, 117421 (RU); KRASNOV, Vladimir Vasilievich, Engels Saratovskaya obl., 413105 (RU); APOSTOLOV, Sergei Petrovich, Saratovskaya obl., 413105 (RU); GODUNOV, Igor Andreevich, Moscow, 117511 (RU); SHKIROV, Viktor Afanasievich, Stepnogorsk Akmolinskaya obl., 474456 (KZ); MARTYNOV, Igor J., Mytischinsky r-n, Moskovskaya obl., 141702 (RU)
(74) Representative: Andrae, Steffen, Dr.
(86) International application number: RU9600106
(87) International publication number: WO9633949

(56) References cited:
- EP-A- 0 305 984
- WO-A-90/15022
- GB-A- 1 186 727
- RU-C- 2 038 337
- SU-A- 1 480 304
- SU-A- 1 497 952
- SU-A- 1 577 244
- SU-A- 1 594 865
- SU-A- 1 630 213
- US-A- 5 057 297
- US-A- 5 352 430
- DATABASE WPI Section Ch, Week 8025 Derwent Publications Ltd., London, GB; Class J03, AN 80-44224C XP002052063 & JP 55 062 807 A (AGENCY OF IND SCI & TECHNOLOGY) , 12 May 1980
- CHEMICAL ABSTRACTS, vol. 119, no. 12, 20 September 1993 Columbus, Ohio, US; abstract no. 120624, BAI XINDE & AL.: "Preparation of expansible graphite" XP002052061 & CN 1 068 086 A 20 January 1993
- CHEMICAL ABSTRACTS, vol. 117, no. 18, 2 November 1992 Columbus, Ohio, US; abstract no. 174494, LIU XIUHING & AL.: "Process and apparatus for the production of expandable graphite" XP002052062 & CN 1 061 387 A 27 May 1992

## Description

### Field of the Invention.

This invention pertains to the technology of carbon-graphite materials, in particular to the production of oxidised graphite used as a component of fireproofing materials, and also to the production of expanded graphite with a high degree of expansion, used in metallurgy, thermal power engineering, chemical, atomic and other fields of industry.

### Prior Art.

Known in the art is the process of production of oxidised graphite by hydrolysis of graphite intercalation compounds (GIC) with strong inorganic acids, mainly such as H₂SO₄ or HNO₃. The essence of this process is the treatment of graphite with saturated acid in the presence of chemical oxidants (KMnO₄, CrO₃, KClO₄, H₂O₂, HNO₃, N₂O₅ etc.) or electrochemically. Depending on the conditions of chemical or electrochemical oxidation of graphite a series of GIC are formed differing in composition and structure. These compounds are called stages and the number of stage is determined by the quantity of carbon layers between two nearest layers of intercalation compound. In the low I stage all the interlayer space is filled with anions inserted into the graphite lattice., in the II and III stages the filling proceeds in one or two unfilled layers, correspondingly. One of the main features of the stage is the identity period I_{c} - periodically repeated fragment of structure determined by an X-ray analysis. The number of the stage of the GIC is regulated by a quantity of electricity passed through the electrolytic solution of acid while graphite treatment proceeds, and also by the potential value at which the treatment proceeds. Besides, while sulphuric acid treatment the number of stage is regulated also by the quantity of oxidant used in the synthesis of the compound. While fuming nitric acid treatment of graphite the synthesis of the stages II and III does not require the presence of the chemical oxidants and the number of stage is regulated by the oxidation conditions. For the obtaining the I stage GIC the addition of N₂O₅ to fuming nitric acid is needed (W.Rüdorf and U.Hofmann, Z. Anorg. Allg. Chem., B238, (1938), N1, S.1-50; A.Metrot and H.Fuzellier, Carbon, v.22, (1984), N2, p. 131-133, V.V.Avdeev et al., Carbon, v.30, (1992), N6, p.819-823).

If the GIC is washed with water and the product of hydrolysis, called oxidised graphite, is subjected to a swift heating the expanded graphite is formed. Expanded graphite is the extremely light chemically inert carbon material with highly developed specific surface and with good heatproof, fireproof and adsorption properties. The expanded graphite is easily pressed into a flexible graphite foil. The products on its base find wide application as shield coverings, packings, thickeners (French Patent N1395964, 1965; US Patent N4102960, 1978).

It is known in the production of the oxidised graphite to treat the graphite with sulphuric acid solution with the addition of 2-5 parts by weight of hydrogen peroxide to 100 parts by weight of H₂SO₄. For its the successful implementation the 80-90% H₂O₂ is needed (US Patent N4091083, 1978). The mentioned process is ecologically pure but the use of highly saturated hydrogen peroxide solutions reduces the reproducibility of the process.

For the production of oxidised graphite a process is known comprising the treatment while mixing of powder graphite with ammonium persulfate solution in 98.5-100% sulphuric acid with redox potential of oxidising solution equal to 1.3-1.8 V, the consumption of oxidant is 0.4 g per 1g of graphite. The I stage intercalation compound of sulphuric acid in graphite (graphite hydrogensulphate) is formed. It is then separated from oxidising solution, is subjected to hydrolysis and washing. From the obtained oxidised graphite the expanded graphite is formed at 1000°C having the density of 0.0012g/cm³ (Russian Patent N1738755, 1993).

The disadvantage of the process is the higher consumption of costly oxidant and the necessity to use the sulphuric acid monohydrate with concentration of 98.5-100%.

A process of production of oxidised graphite is known consisting in the treatment of powder graphite with the mixture of 96% H₂SO₄ and 95% HNO₃ in the ratio of HNO₃: H₂SO₄=0.07, followed by washing to pH=7 and drying. The expanded graphite with density of 0.005 g/cm³ can then be obtained from oxidised graphite at 400-1000°C in the presence of gaseous ammonia (USSR Author Certificate N1813711, 1993).

The disadvantage of the process is the large consumption of water needed for the washing of oxidised graphite to pH=7 and also the use of gaseous ammonia requiring the complicated devices and special safety measures which rise the cost of the process.

An electrochemical process of producing the graphite hydrogensulphate and then oxidised graphite is known comprising the insertion of powder graphite and sulphuric acid solution into the electrochemical chamber, pressing the graphite to anode, electrochemical treatment of pressed graphite in the sulphuric acid solution between cathode and anode in isolated region followed by unloading of graphite hydrogensulphate. The consumption of sulphuric acid is not controlled in the process. The current density is 40-50 mA/cm², the voltage increases in the course of treatment from 2.3 to 4.4 V. The obtained by following treatment expanded graphite has the density of 0.004 g/cm³. The device for performing this process comprises the cylindrical housing with pipes for loading the reagents and unloading the graphite hydrogensulphate, anode and cathode inserted in the housing and sulphuric acid permeable diaphragm for pressing graphite to anode (US Patent N4350576, 1982).

The process is a cyclic one and is low productive because of a large duration of the process: the treatment takes 7 hours. The disadvantage of the process is also the processing of electrochemical oxidation of graphite at a constant current density, which does not allow obtaining the uniform product while using large quantities of graphite.

Known in the production of the oxidised graphite is a process comprising the treatment of graphite with 60-90% HNO₃ taken in 3-5 fold excess in the presence of 4-20 fold excess of KMnO₄, following washing the formed intercalation compound of nitric acid in graphite with water (graphite nitrate), wetting with antifretting agents and drying at temperature not lower than 1000°C. As a result of heat treatment of oxidised graphite the expanded graphite is formed with the density of 0.012 g/cm³ (US Patent N4244934, 1981).

The disadvantage of the process is the use of expensive oxidant that makes the process uneconomical. Besides that the oxidised graphite has a low degree of expansion.

### Summary of the Invention.

The proposed process allows obtaining with high specific effectivity the oxidised graphite of uniform composition with high degree of expansion. For the implementation of the process in preferable variants the design of the device as also proposed.

The process of obtaining the oxidised graphite comprises the treatment of powder graphite in an electrolytic solution of strong acids to produce the GIC, hydrolysis, washing and drying the oxidised graphite, the treatment is conducted in the presence of chemical oxidants at a constant redox potential 0.55-1.55 V and/or treatment is conducted by anodic oxidation of graphite while passing the electric current through the mixture of graphite and acid placed between anode and cathode at a constant anode potential 1-2 V and in a weight acid-to-graphite ratio of 14. As a strong acid sulphuric or nitric acids are used mainly. In the sulphuric acid solution the treatment can be carried out at a constant redox potential 0.65-0.75 V with submission of gaseous chlorine in it, or at a constant redox potential 0.55-0.65 V with submission of sulphur (VI) oxide in it, or at a constant redox potential 0.94-1.09 V with submission of fuming nitric acid in it at weight ratio of nitric to sulphuric acid equal to 1-2 recalculated for waterless acids, or at a constant redox potential 1.45-1.55 V with submission of ammonium nitrate in it with consumption 0.046-0.137 g per 1 g of starting graphite. In the last housing while separation of GIC the excess of oxidising solution is removed preferably to the concentration of less than 1.5 g per 1 g of graphite. The treatment in the fuming nitric acid is carried out at a constant redox potential 0.92-0.97 V and the drying of oxidised graphite is conducted at temperature not higher than 80°C.

Electrochemical anodic oxidation of graphite in the saturated solution of sulphuric acid is conducted at anode potential of 1.6-2.0 V, 1.3-1.5 V and 1.0-1.2 V for the formation of the I, II and III stages GIC correspondingly. It is possible for the formation of the I stage GIC to conduct the treatment of graphite consecutively in the sulphuric acid solution with redox potential 0.65-0.75 V with submission of gaseous chlorine in it, or in the sulphuric acid solution with redox potential 0.55-0.65 V with submission of sulphur (VI) oxide in it and with consecutive anodic oxidation of reaction mixture at a constant anode potential 1.6-2.0 V. For the formation of II and III stages GIC the anodic oxidation of graphite can be carried out in the saturated nitric acid solution at anode potential 1.3-1.4 V and 1.15-1.2 V correspondingly.

The specified potential ranges provide obtaining the uniform oxidised graphite with controllable degree of expansion. Reduction of the potential below the specified values leads to obtaining only highest stages of GIC with low degree of expansion. Increase of potential is also inexpedient since it leads to the overoxidation of graphite and reduces its degree of expansion.

According to the invention the graphite treatment can be carried out consecutively: at the first stage using chlorine or sulphur (VI) oxide, and then using electrochemical oxidation of II stage GIC obtained with chemical oxidants to I stage GIC with high degree of expansion.

It has been experimentally stated that the degree of expansion of oxidised graphite depends on the number of stage of GIC: the lower the stage number the higher the quality of expanded graphite can be obtained. Therefore the oxidation of graphite should be conducted in strictly controlled conditions allowing obtaining predetermined stage of GIC. One of the main factors controlling the synthesis of the given GIC stage is the potential value at which the graphite treatment is carried out. Chemical and electrochemical oxidation of graphite have the uniform mechanism, hence one can assume the equivalence between the redox potential of chemical oxidant solution in saturated acids and the anode potential of electrochemical oxidation of graphite. Equilibrium values of anode potential needed for the synthesis of I-III stages of GIC are 0.46-0.55 V for III stage, 0.55-0.83 V for II stage and higher than 0.83 V for I stage of GIC (graphite hydrogensulphate). Redox potentials of oxidant in the sulphuric acid solution depend on the nature of both oxidant and saturated acid. It has been experimentally stated that if the redox potential value of the oxidant in the saturated sulphuric acid solution coincides with that of electrochemical potential of formation of I stage GIC then in the course of chemical synthesis the I stage of graphite hydrogensulphate will be obtained. For example, if the potential of chlorine dissolved in the saturated sulphuric acid has the value of 0.65-0.75 V thus corresponding to the formation range of II stage GIC, then the use of this oxidant will lead to the formation of the II stage graphite hydrogensulphate. Similarly, with the concentration of sulphur oxide in sulphuric acid 5-15 % by weight the potential changes in the range of 0.55-0.65 V what means the possibility of formation of only II stage. To obtain the I stage is possible only by combination of chemical and electrochemical methods, oxidising the II stage electrochemically.

The actual potential values at which the electrochemical treatment of graphite is conducted are slightly higher than the equilibrium values. This is due to the fact that the conduction of the graphite anodic oxidation process in the equilibrium conditions requires longer time and for increase of speed of the process the double increase of working potential is necessary.

The device for use in obtaining the oxidised graphite comprises reactor with housing having inner cylindrical surface. The reactor is equipped with pipes for loading reagents and unloading the formed products. Anode, cathode and the permeable for sulphuric acid diaphragm for pressing graphite to anode located between cathode and anode are inserted in the housing. Also inserted in the housing are vanes, which are radially fixed on the axial horizontal shaft and have an opportunity of rotation and radial moving against the stop to a surface of the anode. Diaphragm is made in the form of a ring with cuts for vanes forming isolated zones for electrochemical treatment. Cathode is made in the form of a wheel with cuts for vanes fixed on the axial shaft. Half-ring-shaped anode is situated in the lower part of the housing between pipes for loading and unloading. The axis of anode half-ring is shifted against horizontal shaft axis to the unloading pipe increasing the gap between anode and diaphragm in 1.5-3 times from loading to unloading pipe.

Besides, the device can be equipped by a mixer with pipes for loading reagents and an injector for loading gaseous oxidants and a pipe for removing exhaust gases and pipes for draining off formed products, one of which is connected with the loading pipe through the feeder. Since it is not convenient to conduct the hydrolysis of GIC right in the reactor the device can also be equipped with vessels for hydrolysis of GIC and for washing the oxidised graphite and with means of filtration and drying. Hydrolysis and washing can be staged in the same vessel but it is preferable to conduct each operation in a separate vessel.

### Brief Description of the Drawings.

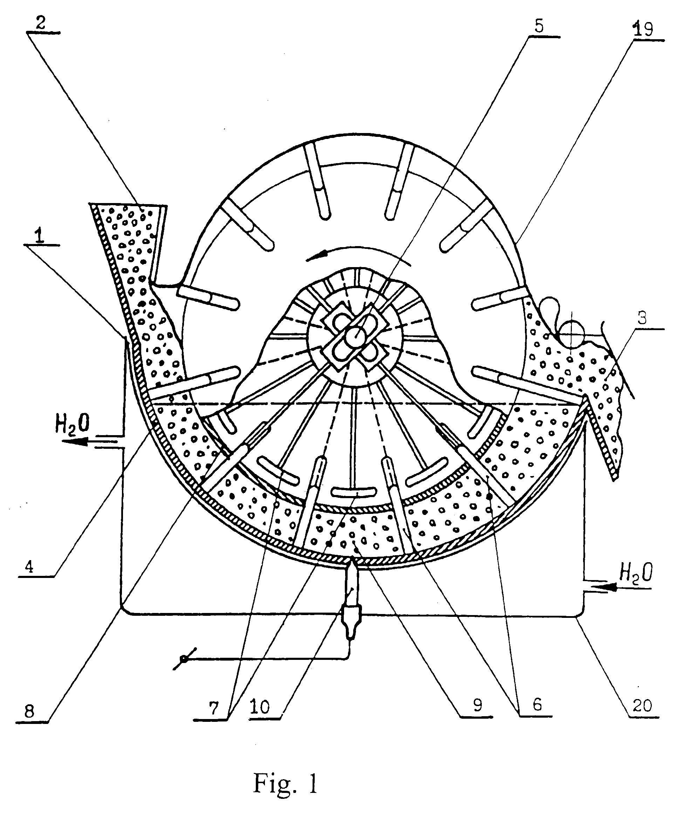

Referring to Fig. 1, a cross section of the reactor included in the framework of device for use in production of oxidised graphite is shown.

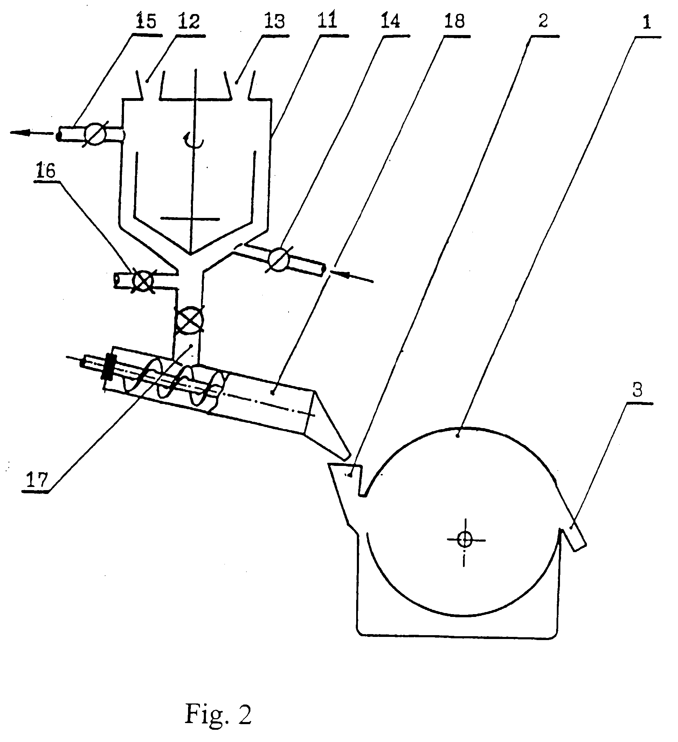

Referring to Fig.2, device for use in production of oxidised graphite including a mixer and a feeder for chemical treatment of graphite is shown.

Reactor comprises a housing (1) with cylindrical inner surface with pipes (2) and (3) for loading starting reagents and unloading obtained products, correspondingly. Between the pipes (2) and (3) in the lower part of housing (1) anode (4) is situated made in the form of a half-ring. On the horizontal rotating shaft (5) in the housing (1) are fixed radial vanes (6) with an opportunity of rotation and radial moving against the stop to a surface of the anode (4). Cathode (7) is made in the form of a wheel with cuts for radial vanes (6). Situated between anode half-ring (4) and cathode (7) a ring diaphragm (8), permeable for sulphuric acid solution, serves for pressing graphite to a half-ring-shaped anode (4). Diaphragm (8) has cuts for radial vanes (6). Isolated zones (9) for electrochemical treatment are formed between anode (4) surface, ring diaphragm (8) and two neighbouring vanes (6). Mercury-sulphate comparison electrode (10) for measuring anode potential during electrochemical treatment of graphite is located in the lower part of housing (1).

Since anode half-ring (4) is shifted against the shaft (5) axis, the gap between diaphragm (8) and anode (4) increases to 1.5-3 times from loading to unloading zone. The increase of the gap is necessary for providing uniform pressing of reaction mixture to anode across the whole reaction > zone (graphite particles volume increases in the course of treatment due to the increase of the interlayer gaps of graphite structure). Thanks to such a design of a reactor it is possible to conduct a continuous process of electrochemical oxidation of graphite at a constant anode potential and to produce uniform product. The constancy of potential is maintained by automatic tuning of the applied voltage.

Device for use in the production of oxidised graphite is also equipped with a mixer (11) with pipes (12) and (13) for loading reagents, with injector (14) for gaseous oxidants, with pipe (15) for exhaust gases and with pipes (16) and (17) for draining off the reaction mixture, one of which (17) is connected to the loading pipe (2) of the reactor through feeder (18). Any known appropriate devices can serve as vessels for hydrolysis of GIC, washing of oxidised graphite and means for filtration and drying. Such equipment (not shown in the Figures) can be consecutively connected with pipe (3) for unloading the reactor or with pipe (16) of mixer (11) for chemical treatment.

### Modes for carrying out the invention.

### Example 1.

15 kg of natural graphite (main fraction particle size more than 250 ìm, ash residue lower than 0.1 % by weight) have been loaded into the cylindrical mixer (11), equipped with a mixing shaft (not shown), through pipe (12) with the help of booster. Then the mixer has been switched on with a speed 30 r/min and 32 l of saturated H₂SO₄ (d=1.83 g/cm³) has been uniformly inserted for 20 min through pipe (13) using the booster. After that, not stopping mixing, ozone-oxygen mixture (ozone concentration - 10 % by volume) has been fed through injector (14) at an consumption of 600 l/h. Weight ratio H₂SO₄: graphite = 4; redox potential of the oxidising solution in sulphuric acid measured in potentiometric cell with mercury-sulphate comparison electrode has been 1.36 V. After 10 h reaction mixture containing graphite hydrogensulphate in sulphuric acid solution has been unloaded through pipe (16). X-ray analysis has shown that the reaction product is the I stage graphite hydrogensulphate with identity period I_{c}=7.97 Å.

After that hydrolysis of graphite hydrogensulphate, washing with water and drying of the product have been done. 18.7 kg of graphite hydrogensulphate have been obtained. Then heat treatment has been carried out in a muffle furnace at 1000°C for 15 s. As a result expanded graphite with density 0.001 g/cm³ has been obtained. Deviation of density is not more than 3%. Ash residue of expanded graphite 0.1 % by weight. Expansion degree of oxidised graphite is 1000 cm³/g.

### Example 2.

Mixer (11) has been filled with 10 1 of H₂SO₄ (d=1.83 g/cm³) and 15 1 of fuming HNO₃ (d=1.49 g/cm³) and mixing has been done for 20 min. Then 10 kg of natural graphite has been added and its chemical treatment has been conducted while mixing at 60 r/min for 1.5 h. Weight ratio HNO₃:H₂SO₄=1.25 calculated for waterless acids. Weight ratio H₂SO₄: graphite = 1.8; redox potential of the oxidising has been 1.03 V. Further reaction mixture has been let into the a vessel with cold water (t < 20°C) and has been mixed for 30 min. After that solid phase has been filtrated from liquid. X-ray analysis has shown that the product is the I stage GIC (I_{c}=7.93 Å). Then the residue has been washed with hot water (50-60°C) until washing water pH=2.0. Obtained oxidised graphite has been dried at 90°C and has been analysed Residue sulphur concentration has been 2.0 % by weight. After heat treatment of oxidised graphite at open air in muffle furnace at 1000°C for 10 s expanded graphite has been obtained with density 0.003 g/cm³. Sulphur concentration in expanded graphite is 0.1 % by weight. Expansion degree of oxidised graphite is 330 cm³/g.

### Example 3.

Mixer (11) has been filled with 15 kg of natural graphite, 10 l of sulphuric acid (d=1.84 g/cm³) and 23 l of fuming sulphuric acid containing 10 % by weight of free SO₃. Simultaneously with filling the mixing has been switched on at 30 r/min and the oxidising treatment of graphite has been carried out at redox potential 0.6 V. Weight ratio H₂SO₄ : graphite = 1.2. After 1 h reaction mixture containing II stage GIC (Ic=11.35 Å) has been unloaded. Consecutively hydrolysis, washing and drying have been conducted. As a result 16.4 kg of oxidised graphite has been obtained. By further treatment expanded graphite with density 0.005 g/cm³ has been produced. Density deviation is not more than 3%. Ash residue of expanded graphite <0.1 % by weight. Expansion degree of oxidised graphite 200 cm³/g.

### Example 4.

In order to set a particular level of the oxidising solution in reactor 12 1 of H₂SO₄ (d=1.83 g/cm³) has been filled through pipe (2) into the lower part of reactor (1). After that the rotation of the axial shaft (5) with attached cathode (7), diaphragm (8) and radial vane (6) has been switched on. Rotation speed was 1 round in 3 h. Further the mixture of graphite and saturated sulphuric acid (d=1.83 g/cm³), preliminary mixed for 30 min in mixer (11), has been loaded through pipe (2). The loading of the reaction mixture has been conducted continuously with consumption 3 kg/h. Weight ratio H₂SO₄ : graphite = 2. Cathode and anode half-ring has been switched to voltage and electrochemical treatment of graphite has been carried out at anode potential 1.5 V measured with mercury-sulphate comparison electrode (10). Graphite has been transported from the loading zone by vanes (6) along the anode half-ring (4) and has been pressed by diaphragm (8). Between diaphragm (8), anode half-ring (4) and two neighbouring vanes (6) a reaction zone (9) has been formed which in process of moving has immersed in sulphuric acid solution which filled the lower part of cylindrical housing (1). Further graphite has been transported by vanes (6) from loading pipe (2) to unloading pipe (3). Since the gap between diaphragm and anode half-ring (4) steadily increased, vane (6) has pushed forward practically to a stop to a surface of anode half-ring (4). Radial movement of vanes (6) has been regulated by directing surface of upper part (19) of cylindrical reactor housing (1). In the unloading zone vanes (6) have been drowned and graphite hydrogensulphate has been purged from diaphragm (8) surface. After 1.5 h at unloading pipe (3) a continuous unloading of a product in a form of a thick pulp of graphite hydrogensulphate in sulphuric acid solution has been performed. During electrochemical treatment the constant temperature (25-30°C) in reaction zone has been maintained by cooling the outer surface of anode half-ring by circulating cold water in water-jacket (20).

X-ray analysis has shown that II stage graphite hydrogensulphate has been obtained (I_{c}=11.35 Å). Absence of graphite that has not reacted or graphite hydrogensulphate of other stages confirms the uniformity of the product.

Further graphite hydrogensulphate has been hydrolysed washed and dried. After that oxidised graphite has been thermotreated at 1000°C in a muffle furnace and expanded graphite has been obtained with density 0.002 g/cm³. Density deviation is not more than 3%. Ash residue of expanded graphite <0.1 % by weight. Expansion degree of oxidised graphite 500 cm³/g.

Results of electrochemical experiments are presented in Table 1.

**Table 1.**

| Example No. | Weight ratio H₂SO₄ : graphite | Acid | Angular speed of shaft rotation (h⁻¹) | Anode potential (V) | Phase composition of the product | Expansion degree of oxidised graphite at 1000°C |
|---|---|---|---|---|---|---|
| 4 | 2 | H₂SO₄ | 0.33 | 1.5 | II stage | 500 |
| | | | | | GIC-H₂SO₄ | |
| 5 | 1 | H₂SO₄ | 1.0 | 1.0 | III stage | 250 |
| | | | | | GIC-H₂SO₄ | |
| 6 | 3 | H₂SO₄ | 0.33 | 2.0 | I stage | 1000 |
| | | | | | GIC-H₂SO₄ | |
| 7 | 3 | HNO₃ | 1.0 | 1.2 | III stage | 165 |
| | | | | | GIC-HNO₃ | |
| 8 | 4 | HNO₃ | 1.0 | 1.4 | II stage | 330 |
| | | | | | GIC-HNO₃ | |

### Example 9.

22 l of H₂SO₄ (d=1.83 g/cm³) has been poured into the mixer (11) then 1.37 kg NH₄NO₃ has been added and mixed for 3 min. After that the redox potential of the solution has been measured to be 1.53 V. Further 10 kg of powder natural graphite has been added and mixed at room temperature for 2 h. After that the solid residue has been immediately separated from oxidising solution at the filter until the concentration of solution has been lower 1.5 kg per 1 kg of graphite. The product has been analysis by X-ray and weighed. As a result of the oxidising treatment I stage graphite hydrogensulphate (I_{c}=7.99Å) has been obtained The weight of graphite hydrogensulphate with residual quantity of oxidising solution has been 35 kg. According to calculations one can obtain 20 kg of I stage graphite hydrogensulphate from 10 kg of starting graphite. The weight of oxidising solution, remaining in graphite hydrogensulphate is 15 kg or 1.5 kg per 1 kg of starting graphite. Further 150 l of cold water has been poured to graphite hydrogensulphate and hydrolysis has been conducted for 5 min. After that oxidised graphite has been filtrated, washed at filter with 300 l of hot water and dried at 90°C. 12.7 kg of oxidised graphite has been obtained with expansion degree 900 cm³/g.

### Example 10.

Mixer (11) has been filled with 20 kg of natural graphite and 24 l of sulphuric acid (d=1.83 g/cm³). Gaseous chlorine has been loaded through injector (14) at consumption 150 l/h. Mixing has been switched on at 30 r/min simultaneously with the loading of reagents. Oxidising treatment of graphite has been carried out with weight ratio H₂SO₄ : graphite 2.2 and redox potential 0.72 V. After 3 h the inlet of chlorine has been closed. For electrochemical treatment reaction mixture has been loaded through pipe (17) and feeder (18) into loading pipe (2) of reactor. Loading has been performed with consumption of 6 kg of graphite per 1 h. X-ray analysis of the product obtained in the mixer confirmed the formation of II stage graphite hydrogensulphate. Anodic oxidation of II stage graphite hydrogensulphate has been performed at potential 1.7 V with shaft rotation speed 2 r/h. After 0.5 h the product has been unloaded. According to X-ray analysis electrochemical treatment of II stage graphite hydrogensulphate has led to formation of I stage graphite hydrogensulphate (I_{c}=7.98 Å). After further treatment (hydrolysis, washing, drying) oxidised graphite has been obtained. Expanded graphite with density 0.0018 g/cm³ has been produced after heat treatment at 1000°C. Density deviation is not more than 3%. Ash residue of expanded graphite <0.1 % by weight. Expansion degree of oxidised graphite is 600 cm³g.

### Example 11.

Mixer (11) has been filled with 20 kg of graphite, 11 1 of H₂SO₄ (d=1.83 g/cm³) and 22 l of fuming sulphuric acid with free SO₃ concentration 15 % by weight. Mixing has been switched on at 30 r/min simultaneously with the loading of reagents. Oxidising treatment of graphite has been conducted with weight ratio H₂SO₄ : graphite = 1 and redox potential 0.65 V. After 1 h reaction mixture containing according to X-ray analysis II stage graphite hydrogensulphate (I_{c}=11.40 Å) has been unloaded. Unloading has been carried out through pipe (17) and feeder (18) into loading pipe (2) for performing of electrochemical treatment. Loading has been performed with consumption of 6 kg of graphite per 1 h. Electrochemical oxidation of II stage GIC has been carried out at anode potential 1.9 V and shaft rotation speed 2 r/h. After 0.5 h the product containing I stage graphite hydrogensulphate has been unloaded. Oxidised graphite with expansion degree 1000 cm³/g has been obtained by further treatment.

### Example 12.

Cylindrical mixer (11) equipped with stirrer (not shown) has been filled with 15 kg of natural graphite (main fraction particle size more than 250 ìm, ash residue lower than 0. % by weight) through pipe 12 using graphite booster. The mixer has been switched on at speed 30 r/m and 40 l HNO₃ (d=1.52 g/cm³) has been steadily loaded for 20 min through pipe (13) using booster. Mixing has been performed for 30 min. Weight ratio HNO₃ : graphite = 4 and redox potential of oxidising solution - 0.95 V. X-ray analysis confirmed formation of I stage graphite nitrate with I_{c}=11.24 Å.

After that hydrolysis with cold water (18°C), washing with hot water (40°C) and drying of oxidised graphite at temperature not higher than 800°C have been conducted. Further expanded graphite with density 0.006 g/cm³ has been obtained by heat treatment at 1000°C. Expansion degree of oxidised graphite is 154 cm³/g.

### Industrial Applicability.

The invention can be used for the production of expanded graphite in various fields of engineering.

Synthesis of GIC with consecutive hydrolysis is the first step of obtaining expanded graphite. Material on base of expanded graphite is used in mechanical engineering, chemical, atomic, aerospace industry, heat production and other fields of industry as shield coverings, packings, thickeners working at increased temperature and stable against chemical reagents, crucibles, underlays for melted non-ferrous metals, flexible carbon conductors, heatproof and fireproof composite materials, adsorbents etc.

Proposed invention provides production of oxidised graphite with uniform composition and high specific productivity of the process. Regulation of potential value at which oxidation is carried out allows to obtain strictly determined GIC stage and specified value of graphite expansion degree. Advantage of the process and device is the possibility of obtaining oxidised graphite with high expansion degree up to 1000 cm³/g. Moreover the use of the proposed oxidation method does not lead to the increase of ash residue of graphite.

## Claims

1. A process for production of oxidised graphite comprising the treatment of graphite powder in electrolytic solution of strong acids until formation of a graphite intercalation compound, hydrolysis, washing and drying, wherein the treatment is conducted in the presence of chemical oxidants at a constant redox potential of 0.55-1.55 V and/or the treatment is performed by anodic oxidation while conducting electric current through the mixture of graphite and acid located between the anode and the cathode at a constant anode potential of 1-2 V and in a weight ratio of acid consumption to graphite equal to 1-4.

2. A process according to Claim 1, wherein said acid is sulphuric or nitric acid.

3. A process according to Claims 1-2, wherein the treatment is conducted in the sulphuric acid solution at a constant redox potential 1.3-1.4 V while letting ozone-oxygen mixture in said solution.

4. A process according to Claims 1-2, wherein the treatment is conducted in the sulphuric acid solution at a constant redox potential 0.65-0.75 V while letting gaseous chlorine in said solution.

5. A process according to Claims 1-2, wherein the treatment is conducted in the sulphuric acid solution at a constant redox potential 0.55-0.65 V while letting sulphur (VI) oxide in said solution.

6. A process according to Claims 1-2, wherein the treatment is conducted in the sulphuric acid solution at a constant redox potential 0.94-1.09 V while letting fuming nitric acid in said solution at weight ratio of nitric acid to sulphuric acid 1-2 as calculated for waterless acids.

7. A process according to Claims 1-2, wherein the treatment is conducted in the sulphuric acid solution at a constant redox potential 1.45-1.55 V while letting ammonium nitrate at consumption of 0.046-0.137 g per 1 g of starting graphite in said solution and while separating graphite intercalation compound said oxidising solution is removed to its content less than 1.5 g per 1 g of graphite.

8. A process according to Claims 1-2, wherein the treatment is conducted in the fuming nitric acid at a constant redox potential 0.92-0.97 V and drying is conducted at temperature not higher than 80°C.

9. A process according to Claims 1-2, wherein anodic oxidation of graphite in saturated sulphuric acid solution is conducted at anode potential 1.6-2.0 V, 1.3-1.5 V and 1.0-1.2 V for the formation of I, II and III stage graphite intercalation compound correspondingly.

10. A process according to Claims 1-2, wherein for the formation of I stage graphite intercalation compound the treatment of powder graphite is conducted consecutively in sulphuric acid solution with redox potential 0.65-0.75 V while letting gaseous chlorine in said solution or in sulphuric acid solution with redox potential 0.55-0.65 V while letting sulphur (VI) oxide in said solution with following anodic oxidation of the reaction mixture at a constant anode potential 1.6-2.0 V.

11. A process according to Claims 1-2, wherein anodic oxidation of graphite in sulphuric acid solution is conducted at anode potential 1.3-1.4 V and 1.15-1.2 V for the formation of II and III stage graphite intercalation compound correspondingly.

12. A device for use in obtaining oxidised graphite comprising a reactor with a housing (1) having a cylindrical inner surface, with pipes (2) and (3) for loading reagents and unloading the formed graphite intercalation compound, with an anode (4) and cathode (7) inserted in the housing and a diaphragm (8) for pressing the graphite to the anode (4), located between the cathode (7) and anode (4), wherein radially fixed on the axial horizontal shaft (5) vanes (6) with an opportunity of rotation and radially moving against the stop to a surface of the anode (4) are established in the reactor housing (1), diaphragm (8) is made in the form of a ring with cuts for vanes (6) which form isolated zones (9) for electrochemical treatment, cathode (7) is made in the form of a wheel fixed on the axial shaft with cuts for vanes, the anode (4) is made in the form of a half-ring and is established in the lower part of the housing (1) between the loading and unloading pipes, the axis of the anode half-ring is shifted against the axis of the horizontal shaft (5) to the unloading pipe thus increasing the gap between the anode and diaphragm to 1.5-3 times from the loading pipe to the unloading pipe.

13. A device according to Claim 12, wherein said device is equipped with a mixer (11) with pipes (12) and (13) for loading reagents, and injector (14) for loading gaseous oxidants, and pipe (15) for removing exhaust gases, and pipes (16) and (17) for removing the reaction mixture, one of which is connected to reactor loading pipe through a feeder (18).

14. A device according to Claims 12-13, wherein said device is equipped with vessel for hydrolysis of graphite intercalation compound and for washing oxidised graphite, and with means of filtration and drying.

## Patentansprüche

1. Verfahren zur Herstellung von oxidiertem Graphit, das die Behandlung von Graphitpulver in einer Elektrolytlösung von starken Säuren bis zur Bildung einer Graphit-Einlagerungsverbindung, die Hydrolyse, das Waschen und Trocknen umfaßt, bei dem man die Behandlung in Gegenwart von chemischen Oxidationsmitteln bei einem konstanten Redoxpotential von 0,55-1,55V durchführt und/oder die Behandlung durch anodische Oxidation durchführt, bei der man einen elektrischen Strom durch die Mischung aus Graphit und Säure hindurchleitet, die zwischen der Anode und der Kathode angeordnet ist, und zwar bei einem konstanten Anodenpotential von 1-2V und bei einem Gewichtsverhältnis des Säureverbrauchs zum Graphit von 1-4.

2. Verfahren nach Anspruch 1, bei dem die genannte Säure Schwefel- oder Salpetersäure ist.

3. Verfahren nach den Ansprüchen 1-2, bei dem man die Behandlung in der Schwefelsäurelösung bei einem konstanten Redoxpotential von 1,3-1,4V durchführt, während man der Lösung eine Ozon-Sauerstoff-Mischung zuführt.

4. Verfahren nach den Ansprüchen 1-2, bei dem man die Behandlung in der Schwefelsäure bei einem konstanten Redoxpotential von 0,65-0,75V durchführt, während man der Lösung gasförmiges Chlor zuführt.

5. Verfahren nach den Ansprüchen 1-2, bei dem man die Behandlung in der Schwefelsäurelösung bei einem konstanten Redoxpotential von 0,55-0,65V durchführt, während man der Lösung Schwefel(VI)oxid zuführt.

6. Verfahren nach den Ansprüchen 1-2, bei dem man die Behandlung in der Schwefelsäurelösung bei einem konstanten Redoxpotential von 0,94-1,09V durchführt, während man der Lösung rauchende Salpetersäure in einem Gewichtsverhältnis von Salpetersäure zu Schwefelsäure von 1-2, berechnet für die wasserfreien Säuren, zuführt.

7. Verfahren nach den Ansprüchen 1-2, bei dem man die Behandlung in der Schwefelsäurelösung bei einem konstanten Redoxpotential von 1,45-1,55V durchführt, während man der Lösung Ammoniumnitrat bei einem Verbrauch von 0,046-137 g pro 1 g Ausgangsgraphit zuführt, und wobei man bei der Abtrennung der Graphit-Einlagerungsverbindung die oxidierende Lösung bis auf einen Gehalt von weniger als 1,5 g pro 1 g Graphit entfernt.

8. Verfahren nach den Ansprüchen 1-2, bei dem man die Behandlung in der rauchenden Salpetersäure bei einem konstanten Redoxpotential von 0,92-0,97V durchführt und das Trocknen bei einer Temperatur durchführt, die 80°C nicht übersteigt.

9. Verfahren nach den Ansprüchen 1-2, bei dem man die anodische Oxidation von Graphit in einer gesättigten Schwefelsäurelösung bei einem Anodenpotential von 1,6-2,0V, 1,3-1,5V und 1,0-1,2V zur Bildung von Graphit-Einlagerungsverbindungen der Stufen I, II bzw. III durchführt.

10. Verfahren nach den Ansprüchen 1-2, bei dem man zur Bildung einer Graphit-Einlagerungsverbindung der Stufe I die Behandlung des Graphitpulvers nacheinander in einer Schwefelsäurelösung bei einem Redoxpotential von 0,65-0,75V durchführt, während man der Lösung gasförmiges Chlor zuführt, oder in einer Schwefelsäurelösung mit einem Redoxpotential von 0,55-0,65V, während man der Lösung Schwefel(VI)oxid zuführt, wonach man eine anodische Oxidation der Reaktionsmischung bei einem konstanten Anodenpotential von 1,6-2,0V durchführt.

11. Verfahren nach den Ansprüchen 1-2, bei dem man die anodische Oxidation des Graphits in der Schwefelsäurelösung bei einem Anodenpotential von 1,3-1,4V und 1,15-1,2V zur Bildung der Graphit-Einlagerungsverbindung der Stufen II bzw. III durchführt.

12. Vorrichtung zur Verwendung bei der Gewinnung von oxidiertem Graphit, die einen Reaktor mit einem Gehäuse (1) mit einer zylindrischen Innenoberfläche, mit Rohren (2) und (3) für die Zuführung von Reagenzien und die Entnahme der gebildeten Graphit-Einlagerungsverbindung, einer Anode (4), einer Kathode (7) sowie einem Diaphragma (8) zum Andrücken des Graphits an die Anode (4), das zwischen der Kathode (7) und der Anode (4) angeordnet ist, die in dem Gehäuse angeordnet sind, aufweist, wobei in dem Reaktorgehäuse (1) radial an einer axialen horizontalen Welle (5) befestigte Schaufeln mit einer Möglichkeit ihrer Rotation und radialen Bewegung bis zum Anschlag an der Oberfläche der Anode (4) angeordnet ist, das Diaphragma (8) in Form eines Rings ausgeführt ist, der Einschnitte für die Schaufeln (6) aufweist, die isolierte Zonen (9) für die elektrochemische Behandlung bilden, die Kathode (7) in Form eines Rads mit Einschnitten für die Schaufeln ausgebildet ist, das auf der axialen Welle befestigt ist, und wobei die Anode (4) in Form eines Halbrings ausgebildet ist und im unteren Teil des Gehäuses - (1) zwischen den Rohren für die Zufuhr und die Entnahme angeordnet ist, wobei die Achse des Anoden-Halbrings gegenüber der Achse der horizontalen Welle (5) in Richtung des Entnahmerohrs verschoben ist, wodurch sich der Spalt zwischen der Anode und dem Diaphragma vom Zuführungsrohr zum Entnahmerohr auf das 1,5- bis 3-fache erweitert.

13. Vorrichtung nach Anspruch 12, wobei die genannte Vorrichtung mit einem Mischer (11), mit Rohren (12) und (13) für die Zufuhr der Reagenzien sowie einem Injektor (14) für die Zufuhr gasförmiger Oxidanzien sowie einem Rohr (15) zur Ableitung von Abgasen sowie Rohren (16) und (17) zur Entfernung der Reaktionsmischung versehen ist, von denen eines über die Einspeiseinrichtung (18) mit dem Zuführungsrohr des Reaktors verbunden ist.

14. Vorrichtung nach den Ansprüchen 12-13, wobei die Vorrichtung mit einem Behälter zur Hydrolyse der Graphit-Einlagerungsverbindung und zum Waschen des oxidierten Graphits sowie einer Einrichtung zum Filtern und Trocknen versehen ist.

## Revendications

1. Procédé de production de graphite oxydé, comprenant le traitement de poudre de graphite en solution électrolytique d'acides forts jusqu'à la formation d'un composé avec intercalation de graphite, l'hydrolyse, le lavage et le séchage, dans lequel le traitement est mené en présence d'oxydants chimiques sous un potentiel redox constant de 0,5 à 1,55 V, et/ou dans lequel le traitement est exécuté par oxydation anodique tout en faisant passer un courant électrique à travers le mélange de graphite et d'acide placé entre l'anode et la cathode, à un potentiel d'anode constant de 1 à 2 V, et avec un rapport pondéral de la consommation d'acide vis-à-vis du graphite égal à 1 - 4.

2. Procédé selon la revendication 1, dans lequel ledit acide est de l'acide sulfurique ou de l'acide nitrique.

3. Procédé selon les revendications 1 et 2, dans lequel le traitement est mené dans la solution d'acide sulfurique sous un potentiel redox constant de 1,3 à 1,4 V, tout en amenant un mélange ozone-oxygène dans ladite solution.

4. Procédé selon les revendications 1 et 2, dans lequel le traitement est mené dans la solution d'acide sulfurique sous un potentiel redox constant de 0,65 à 0,75 V, tout en amenant du chlore gazeux dans ladite solution.

5. Procédé selon les revendications 1 et 2, dans lequel le traitement est mené dans la solution d'acide sulfurique sous un potentiel redox constant de 0,55 à 0,65 V, tout en amenant de l'oxyde de soufre (VI) dans ladite solution.

6. Procédé selon les revendications 1 et 2, dans lequel le traitement est mené dans la solution d'acide sulfurique sous un potentiel redox constant de 0,94 à 1,09 V en amenant de l'acide nitrique fumant dans ladite solution, avec un rapport pondéral acide nitrique/acide sulfurique de 1 à 2, comme calculé pour des acides anhydres.

7. Procédé selon les revendications 1 et 2, dans lequel le traitement est mené dans la solution d'acide sulfurique sous un potentiel redox constant de 1,45 à 1,55 V en amenant du nitrate d'ammonium dans ladite solution, avec une consommation de 0,046 à 0,137 g par gramme de graphite au départ, et lors de la séparation du composé d'intercalation de graphite on enlève ladite solution d'oxydation jusqu'à ce que sa teneur soit inférieure à 1,5 g par gramme de graphite.

8. Procédé selon les revendications 1 et 2, dans lequel le traitement est mené dans l'acide nitrique fumant sous un potentiel redox constant de 0,92 à 0,97 V, et l'on procède au séchage à une température qui ne dépasse pas 80°C.

9. Procédé selon les revendications 1 et 2, dans lequel l'oxydation anodique du graphite dans une solution saturée d'acide sulfurique est menée sous un potentiel d'anode de 1,6 à 2,0 V, de 1,3 à 1,5 V, et de 1,01 à 1,2 V pour la formation de composés correspondants d'intercalation de graphite aux stades I, II et III.

10. Procédé selon les revendications 1 et 2, dans lequel, pour la formation de composé d'intercalation de graphite au stade I, le traitement de la poudre de graphite est mené consécutivement dans une solution d'acide sulfurique avec un potentiel redox de 0,65 à 0,75 V en amenant du chlore gazeux dans ladite solution, ou bien dans une solution d'acide sulfurique avec un potentiel redox de 0,55 à 0,65 V en amenant de l'oxyde de souffre (VI) dans ladite solution, suivi d'une oxydation anodique du mélange de réaction sous un potentiel d'anode constant de 1,6 à 2,0 V.

11. Procédé selon les revendications 1 et 2, dans lequel l'oxydation anodique du graphite dans la solution d'acide sulfurique est menée sous un potentiel d'anode de 1,3 à 1,4 V, et de 1,15 à 1,2 V pour la formation correspondante de composé d'intercalation au stade II ou III.

12. Appareil à utiliser pour obtenir du graphite oxydé, comprenant un réacteur avec un boîtier (1) présentant une surface intérieure cylindrique, comportant des tubes (2) et (3) pour charger des réactifs et pour décharger le composé d'intercalation de graphite formé, avec une anode (4) et une cathode (7) introduites dans le boîtier, et un diaphragme (8) afin de presser le graphite sur l'anode (4), placé entre la cathode (7) et l'anode (4), dans lequel des aubes (6), fixées radialement sur l'arbre horizontal axial (5) avec faculté de rotation et en déplacement radial jusqu'en butée contre une surface de l'anode (4), sont prévues dans le boîtier de réacteur (1), ledit diaphragme (8) étant réalisé sous la forme d'un anneau avec des découpes pour les aubes (6) qui forment des zones isolées (9) pour le traitement électrochimique, ladite cathode (7) étant réalisée sous la forme d'une roue fixée sur l'arbre axial avec des découpes pour les aubes, l'anode (4) étant réalisée sous la forme d'un demi-anneau et étant établie dans la partie inférieure du boîtier (1) entre le tube de chargement et le tube de déchargement, l'axe du demi-anneau de l'anode étant déporté par rapport à l'axe de l'arbre horizontal (5) vers le tube de déchargement, augmentant ainsi l'intervalle entre l'anode et le diaphragme de 1,5 à 3 fois depuis le tube de chargement jusqu'au tube de déchargement.

13. Appareil selon la revendication 12, dans lequel ledit appareil est équipé d'un mélangeur (11) avec des tubes (12) et (13) pour charger des réactifs, et un injecteur (14) pour charger des oxydants gazeux, et un tube (15) pour enlever des gaz d'échappement, et des tubes (16) et (17) pour enlever le mélange de réaction, l'un de ceux-ci étant connecté à un tube de chargement de réacteur par l'intermédiaire d'un moyen d'alimentation (18).

14. Appareil selon les revendications 12 et 13, dans lequel ledit appareil est équipé d'un récipient pour l'hydrolyse du composé d'intercalation de graphite et pour le lavage du graphite oxydé, et comprenant des moyens de filtration et de séchage.
